# EUROPÄISCHE PATENTSCHRIFT

(11) **EP 3 466 850 B1**
(45) Veröffentlichungstag und Bekanntmachung des Hinweises auf die Patenterteilung: **01.03.2023**
(21) Anmeldenummer: 17196618.7
(22) Anmeldetag: 16.10.2017
(51) Int. Cl.: B65G 69/00

(54) **PUFFERVORRICHTUNG AUFWEISEND EIN VERSTEIFUNGSELEMENT**
BUFFER DEVICE COMPRISING A STIFFENING ELEMENT
DISPOSITIF FORMANT TAMPON COMPORTANT UN ÉLÉMENT DE RAIDISSEMENT

(30) Priorität: 09.10.2017 DE 102017123380
(43) Veröffentlichungstag der Anmeldung: 10.04.2019
(73) Patentinhaber: Alfred Arnold Verladesysteme GmbH & Co. KG, 70439 Stuttgart (DE)
(72) Erfinder: Arnold, Annette, 70439 Stuttgart (DE)
(74) Vertreter: Patent- und Rechtsanwälte Behrmann Wagner PartG mbB

(56) Entgegenhaltungen:
- DE-A1- 10 003 744
- DE-U1- 9 201 381
- Arnold Verladesysteme: "Kataloge - ARNOLD Verladesysteme", arnold-verladesysteme.com, 12 May 2016 (2016-05-12), pages 1-92, XP055953208, Retrieved from the Internet: URL:https://web.archive.org/web/2016051222 1545if_/http://www.arnold-verladesysteme.c om/fileadmin/templates/arnoldvs/kataloge/G esamtkatalog/pdf/Katalog_Komplett.pdf [retrieved on 2022-08-19]

## Beschreibung

Die Erfindung betrifft eine Puffervorrichtung zur Montage im Bereich einer, eine Ladeöffnung umfassenden, LKW-Ladestation, insbesondere einer Verladerampe, zur Energieabsorption bei Kontakt mit einem rückwärts an die LKW-Ladestation auffahrenden LKW-Heck, umfassend wenigstens eine sich entlang einer Längsachse und einer senkrecht dazu orientierten Breitenachse erstreckenden und eine Kontaktfläche aufweisenden Dämpfungsanordnung auf einer, entlang der Breitenachse voneinander beabstandete, bevorzugt parallele, Seitenkanten umfassenden, Trägerplatte, wobei die Trägerplatte gegenüber der vorderen Vorderseite eine, bevorzugt zur Vorderseite parallele, rückwärtige Montageseite aufweist.

Ferner umfasst die Erfindung ein System umfassend wenigstens eine erfindungsgemäße Puffervorrichtung sowie eine eine Ladeöffnung umfassende LKW-Ladestation.

Puffervorrichtungen für die Montage im Bereich einer eine Ladeöffnung umfassenden LKW-Ladestation als Gebäudeschutz sind aus dem Stand der Technik hinlänglich bekannt. Die Puffervorrichtungen werden bevorzugt an einer Verladerampe mit einer Montageseite an einer Gebäudefläche der LKW-Ladestation angeordnet und dienen dort als Rammschutz für die zum Be- und Entladen rückwärts an die Ladeöffnung der LKW- Ladestation heranfahrenden LKW-Hecks. Dabei ist es aus dem Stand der Technik bekannt, dass die Puffervorrichtungen im montierten Zustand in ihrer Längserstreckung eine untere, horizontal verlaufende Ladekante der Ladeöffnung abschnittsweise überragen. Um eine elastische oder plastische Deformation der Puffervorrichtung bei Kraftbeaufschlagung entlang einer Tiefenachse, beispielsweise durch ein rückwärts auf die Puffervorrichtung auffahrendes LKW-Heck, zu verhindern, ist es auch allgemeint bekannt, die Puffervorrichtung rückseitig durch ein Stützelement zu verstärken. Das Stützelement wird dabei zwischen der überstehenden Montageseite der Puffervorrichtung und einer sich horizontal von der Ladekante erstreckenden Gebäudefläche angeordnet und stützt somit den entlang der Längsachse über der Ladekante überstehenden Bereich der Puffervorrichtung gegen ein elastisches oder plastisches Deformieren entlang der Tiefenachse bei Kraftbeaufschlagung. Bei kostengünstigen Puffervorrichtungen besteht die Dämpfungsanordnung aus einem elastischen Material, meist Gummi, und besitzt oft eine quaderförmige Grundform. Das elastische Material bietet eine Kontaktfläche zur Kraftaufnahme von einem LKW-Heck an, wobei die Kontaktaufnahmefläche wenigstens abschnittsweise entlang der Längsachse über der Ladekante angeordnet sein kann. Zur Verbesserung der Pufferwirkung kann das elastische Material zudem mit Hohlräumen versehen sein.

Daneben existieren Puffervorrichtungen, bei denen die Dämpfungsanordnung durch eine wenigstens eine Federbügel umfassende Federbügelanordnung realisiert ist. Auch hier erfolgt bei einer abschnittsweisen überstehenden Montage der Puffervorrichtung eine rückwärtige Stützung der Puffervorrichtung durch das bügelartige Stützelement, indem das Stützelement die Trägerplatte in dem überstehenden, über der Ladekante angeordneten Bereich mechanisch verstärkt. Eine derartige Puffervorrichtung ist aus der Druckschrift DE 100 03 744 A1 der Anmelderin bekannt und wird schon seit mehreren Jahren erfolgreich als Rammschutz für Gebäudeflächen eingesetzt. Die bekannte Puffervorrichtung umfasst eine zwei Seitenkanten umfassende Trägerplatte mit einer auf der Vorderseite der Trägerplatte angeordneten Federbügelanordnung. Nachteilig bei der Verwendung eines Stützelements ist es, dass die horizontale Ladefläche durch das auf der Ladefläche festgelegte Stützelement verkleinert wird. Hinzu kommt, dass das Stützelement eine Stolperfalle für Bedienpersonal ausbildet. Darüber hinaus ist ein weiterer Nachteil, dass die Ladekante durch die überstehenden Puffervorrichtungen bei einer Kraftbeaufschlagung der Puffervorrichtung in Richtung der Tiefenachse, also beispielsweise durch ein rückwärts auf die Puffervorrichtung auffahrendes LKW-Heck, stark belastet wird, wodurch die Ladekante bereichsweise ausbrechen kann und sich in den Gebäudeflächen Risse ausbilden können, durch die die LKW-Ladestation beschädigt werden kann. Das Katalog von ARNOLD Verladesysteme, das am 12. Mai 2016 veröffentlichen wurde, das im Internet URL: https://web.archive.org/web/20160512221545if_/http://www.arnold-verladesysteme.com/fileadmin/templates/arnoldvs/kataloge/Gesamtkatalog/ pdf/Katalog_Komplett.pdf gefunden wurde, offenbart insbesondere auf Seiten 47-49 eine Puffervorrichtung nach dem Oberbegriff des Anspruchs 1. Ausgehend von dem vorgenannten Stand der Technik liegt der Erfindung die Aufgabe zu Grunde, eine verbesserte und universell einsetzbare Puffervorrichtung anzugeben, die im montierten Zustand trotz des abschnittsweisen überragen einer Ladekante kein Stützelement benötigt. Besonders bevorzugt ist in diesem Zusammenhang auch, wenn durch die Puffervorrichtung die Ladekante nicht beschädigt wird.

Diese Aufgabe wird hinsichtlich der Puffervorrichtung mit den Merkmalen des Anspruchs 1 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, auf der Trägerplatte wenigstens ein sich entlang der Längsachse erstreckendes, bevorzugt stabförmig ausgebildetes, Versteifungselement anzuordnen, das bevorzugt materialschlüssig mit der Trägerplatte verbunden ist, um auf ein rückwärtig zur Trägerplatte angeordnetes Stützelement verzichten zu können. Erfindungsgemäß verhindert das Versteifungselement eine plastische Deformation der entlang der Breitenachse zueinander beabstandete, bevorzugt parallele, Seitenkanten umfassenden Trägerplatte der Puffervorrichtung entlang einer sich senkrecht zur Breitenachse und zur Längsachse erstreckenden Tiefenachse, wobei das Versteifungselement entlang der Tiefenachse nach vorne eine Vorderseite der Trägerplatte überragt und dabei gegenüber der Kontaktfläche der Dämpfungsanordnung entlang der Tiefenachse zurückgesetzt ist. Anders ausgedrückt ermöglicht das wenigstens eine Versteifungselement eine höhere Kraftaufnahme durch die Trägerplatte, wodurch diese entlang der Längsachse abschnittsweise über die Ladekante überstehend angeordnet werden kann. In diesem Zusammenhang ist es bevorzugt, wenn die Ladeöffnung der LKW-Ladestation durch zwei entlang der Längsachse erstreckende Hochkanten sowie die untere sich entlang der Breitenachse erstreckende Ladekante definiert wird und die Trägerplatte dann abschnittsweise die horizontal ausgebildete Ladekante in eine vertikale Hochrichtung überragt. Durch das erfindungsgemäße Versteifungselement kann vollständig auf das rückseitig zur Puffervorrichtung angeordnete Stützelement verzichtet werden. Dies ermöglicht eine freie Laderampe ohne einen Flächenverlust durch die Anordnung von Stützelementen für überstehende Puffervorrichtungen, wobei auf der Laderampe durch montierte Stützelemente keine Stolperfallen für das Bedienpersonal ausgebildet werden. Darüber hinaus lässt sich durch die Materialstärke sowie die Anzahl der Versteifungselemente die maximale Kraftaufnahme der Puffervorrichtung bestimmen. Dies ermöglicht erfindungsgemäß eine optimale Anpassung der Puffervorrichtung an einen Anwendungsfall mit dem Ziel von reduzierten Materialkosten. Erfindungsgemäß ist das Versteifungselement entlang der Längsachse ausgerichtet.

Auch ist eine Ausbildung des Versteifungselements mit einer U-Kontur möglich, wobei bei sämtlichen Ausführungsformen das Versteifungselement derart auf der Trägerplatte angeordnet ist, dass es sich zu beiden Seiten der Ladekante erstreckt.

Das wenigstens ein Versteifungselement ist entlang der sich senkrecht zur Breitenachse und zur Längsachse erstreckenden Tiefenachse zwischen der Vorderseite der Trägerplatte und der, bevorzugt entlang der Tiefenachse von dem Versteifungselement beabstandeten, Dämpfungsanordnung angeordnet. In anderen Worten bedeutet dies, dass das Versteifungselement zwischen der Vorderseite der Trägerplatte und einer der Kontaktfläche der Dämpfungsanordnung entlang der Tiefenachse gegenüberliegenden Fixierseite der Dämpfungsanordnung angeordnet ist. Weiterbildend kann das Versteifungselement auch derart auf der Vorderseite der Trägerplatte festgelegt sein, dass die Dämpfungsanordnung in Bezug auf die Breitenachse unmittelbar benachbart zu dem wenigstens einen Versteifungselement auf der Vorderseite der Trägerplatte angeordnet ist. Alternativ ist eine Ausführungsform vorgesehen, in welcher das wenigstens eine Versteifungselement entlang der Breitenachse seitlich zu der Trägerplatte angeordnet ist, wobei das wenigstens eine Versteifungselement in diesem Zusammenhang in Bezug auf die Tiefenachse eine größere Dicke bzw. Tiefenerstreckung aufweist als die Trägerplatte und die Trägerplatte auf der vom Gebäude abgewandten Vorderseite überragt. Im Hinblick auf die Fixierung des Versteifungselements an der Trägerplatte gibt es unterschiedliche Möglichkeiten. Bevorzugt ist eine Fixierung mittels verschweißen. Zusätzlich und alternativ sind auch andere Befestigungsmechanismen wie verschrauben und vernieten möglich. Grundsätzlich ist auch eine einteilige Ausbildung des Versteifungselements und der Trägerplatte realisierbar, insbesondere in Form einer u-förmigen Trägerplatte.

Weiterbildend können auch zwei sich entlang der Längsachse erstreckende Versteifungselemente auf der Vorderseite der Trägerplatte oder seitlich zur Trägerplatte vorgesehen sein. Alternativ und/oder ergänzend ist es auch vorgesehen, dass das Versteifungselement einen U-Grundriss besitzt und sich somit entlang der Längsachse sowie der Breitenachse der Trägerplatte erstreckt. In diesem Zusammenhang ist auch eine überkreuzende Anordnung von mehreren Versteifungselementen weiterbildend vorgesehen.

Besonders bevorzugt ist eine Ausführungsform der Erfindung, bei welcher das wenigstens eine Versteifungselement sich entlang der Längsachse um mindestens 60% der Längserstreckung der Trägerplatte erstreckt, wobei in diesem Zusammenhang es besonders bevorzugt ist, wenn das wenigstens eine Versteifungselement im Bereich der Trägerplatte festgelegt ist, in welchem sich auch das obere Ende der Dämpfungsanordnung erstreckt. Dies gewährleistet eine mechanische Verstärkung der Trägerplatte im montierten Zustand im Bereich des überstehenden oberen Abschnitts der Trägerplatte und bietet somit eine kostengünstige und materialsparende Möglichkeit die Puffervorrichtung zu verstärken, ohne die Notwendigkeit eines rückwärtigen Stützelements.

Besonders bevorzugt ist eine Ausführungsform der Erfindung, bei der die Trägerplatte auf der zur Vorderseite der Trägerplatte abgewandten, rückwärtigen Montageseite der Trägerplatte auf einer Abstandsplatte zur Beabstandung der Trägerplatte von einer Gebäudefläche angeordnet, insbesondere festgelegt, ist, wobei die Trägerplatte entlang der Längsachse im oberen Bereich in Bezug auf die Längsachse zu der Abstandsplatte übersteht. In anderen Worten ausgedrückt bedeutet dies, dass die Montageseite der Trägerplatte lediglich abschnittsweise direkt in Kontakt mit der Abstandsplatte steht. Durch die von der Ladekante in Längsrichtung beabstandete Abstandsplatte kann die Belastung der Gebäudefläche im Bereich der Ladekante reduziert werden, um die LKW-Ladestation im Bereich der Ladekante vor Beschädigung durch eine zu große Kraftbeaufschlagung zu schützen. Dies ermöglicht es somit vorteilhaft, dass die LKW-Ladestation keine konstruktiv zusätzlich verstärkte Ladekante benötigt.

Weiterbildend ist es vorgesehen, dass die Dämpfungsanordnung einen Elastomermaterialpuffer und/oder eine Federbügelanordnung aufweist. Dies ermöglicht die Kombination von dem erfindungsgemäßen Versteifungselement mit den aus dem Stand der Technik bekannten Puffervorrichtungen. Somit lässt sich die erfindungsgemäße Wirkung des Versteifungselements mit den jeweiligen Vorteilen der unterschiedlichen Puffervorrichtungen kombinieren.

In einer Weiterbildung dieser Ausführungsform umfasst die Federbügelanordnung mindestens einen Federbügel, wobei eine zwei Seitenkanten umfassende Trägerplatte mit einer auf der Vorderseite der Trägerplatte angeordneten Schwenklagerung zur endseitigen Aufnahme einer auf der Vorderseite der Trägerplatte angeordneten Federbügelanordnung in einem Lagerabschnitt zusammenwirkt. Die Schwenklagerung weist zwei entlang einer Breitenachse um einen Lagerabstand beabstandete Kraftaufnahmeelemente auf und ermöglicht das Verschwenken des Federelements um eine parallel zur Breitenachse orientierte Schwenkachse. Die Federbügelanordnung erstreckt sich entlang einer Längsachse und stützt sich an einem zweiten Ende auf der Trägerplatte in einer Abstützfläche ab. Bei einer Kraftbeaufschlagung der Federbügelanordnung gleitet diese dann auf der Vorderseite der Trägerplatte entlang einer Gleitstrecke in Längsrichtung. Zudem ist zur Vermeidung eines Abfederns der Federbügelanordnung senkrecht zur Trägerplatte ein Sicherungselement vorgesehen, das eine Aufnahmeöffnung für einen endseitig an der Federbügelanordnung ausgebildeten Zungenabschnitt ausbildet.

Weiterbildend ist die Federbügelanordnung bevorzugt in dem Zwischenabschnitt in der Breitenerstreckung derart verlängert, dass der Zwischenabschnitt der, insbesondre aus Stahl ausgebildeten, Federbügelanordnung den Lagerabschnitt und/oder den Zungenabschnitt überragt. In diesem Zusammenhang ist es zudem bevorzugt, wenn der Zwischenabschnitt entlang der Breitenachse bis zu mindestens einer der Seitenkanten der Trägerplatte oder sogar darüber hinaus ausgebildet ist. Andres ausgedrückt bedeutet dies, dass die Federbügelanordnung an mindestens einem Ende bevorzugt an beiden Enden entlang der Längsachse beabstandet (jeweils) eine Einschnürung bzw. Einschlaufung umfasst in der die Federbügelanordnung mittel- und/oder unmittelbar mit der Trägerplatte in Wirkverbindung steht. Vorteilhaft ist der Kontakt in einem ersten Ende der Federbügelanordnung in Form einer Schwenklagerung ausgebildet, die die Federbügelanordnung in einem Lagerabschnitt aufnimmt und das Verschwenken der Federbügelanordnung um die Schwenkachse ermöglicht. In dem dem ersten Ende entlang der Längsachse gegenüberliegenden zweiten Ende stützt sich die Federbügelanordnung auf der Vorderseite der Trägerplatte in der Abstützfläche ab. Das zweite Ende umfasst bevorzugt den Zungenabschnitt. Der Zungenabschnitts und/oder der Lagerabschnitt weist/en bevorzugt eine verringerte Breitenerstreckung/en als der Zwischenabschnitt auf. Dies ermöglicht es vorteilhaft, dass die Federbügelanordnung in der Breitenerstreckung unmittelbar neben der Hochkante der Gebäudeöffnung (Ladeöffnung) angeordnet werden kann.

Eine Weiterbildung der Erfindung sieht vor, dass das Sicherungselement einen Axialanschlag zur Begrenzung der Gleitstrecke für einen den Zungenabschnitt entlang der Breitenachse überragenden Federbügelanschlagsabschnitt der Federbügelanordnung ausbildet. Dies ermöglicht es vorteilhaft, die Federbügelanordnung vor Beschädigung zu schützen, da sichergestellt werden kann, dass bei Kraftbeaufschlagung die Federbügelanordnung lediglich im elastischen Bereich verformbar ist. Ferner ermöglicht diese Weiterbildung, dass zur Anpassung der Pufferwirkung der Puffervorrichtung ein zwischen der Trägerplatte und der Federbügelanordnung bevorzugt vorgesehenes Pufferelement kleiner und damit kostengünstiger dimensioniert (ausgelegt) werden kann. Darüber hinaus ermöglicht eine derart ausgebildete Ausführungsform der Erfindung auch, dass die Federbügelanordnung eine geringere Dicke / Tiefenerstreckung aufweisen kann, wodurch sich die Materialkosten und das Gewicht der Puffervorrichtung vorteilhaft reduzieren lässt.

In diesem Zusammenhang ist weiterbildend vorgesehen, wenn der Axialanschlag und der Federbügelanschlagsabschnitt zum Begrenzen der Gleitstrecke in einem nicht kraftbeaufschlagten, d. h. nicht von außen in Richtung der Trägerplatte niedergedrückten Zustand der Federbügelanordnung entlang der Längsachse um einen einer maximalen Gleitstreckenerstreckung entsprechenden Abstand aus einem Wertebereich von 0,5cm bis 10cm, bevorzugt von 0,5cm bis 8cm, beabstandet ausgebildet ist. Dies ermöglicht eine hohe Pufferwirkung auf einer für die Anwendung anpassbaren Pufferstrecke, wobei die Pufferstrecke die Weglänge umfasst, die die Federbügelanordnung zwischen der entspannten Position zur kraftbeaufschlagten unentspannten Position senkrecht zur Trägerplattenflächenerstreckung (entlang einer Tiefenachse) zurücklegt.

Eine Ausführungsform der Erfindung ist auch besonders zweckmäßig, in der die Breitenerstreckung des Zwischenabschnitts und/oder mindestens eines Federbügels im Bereich des Zwischenabschnitts größer ist als 15cm, insbesondere gewählt ist zwischen 16cm und 32cm. Wie bereits erwähnt ist es in diesem Zusammenhang besonders bevorzugt, wenn die gesamte Federbügelanordnung und/oder wenigstens einer der die Federbügelanordnung ausbildenden Federbügel aus einer, bevorzugt aus Stahl ausgebildeten, Metallplatte, hergestellt wird, die zur Ausbildung eines der Federbügel dann entlang der Längsachse mechanisch zerteilt (geschnitten) wird.

Eine Weiterbildung der Erfindung sieht vor, dass die Federbügelanordnung aus wenigstens zwei sich entlang der Breitenachse erstreckenden, bevorzugt im Hinblick auf eine sich senkrecht zu einer Flächenerstreckung der Trägerplatte erstreckenden und im montierten Zustand vertikalen Spiegelebene, spiegelsymmetrisch ausgebildeten Federbügeln besteht oder solche umfasst, wobei der Lagerabschnitt, der Zwischenabschnitt und der Zungenabschnitt jeweils von mindestens zwei der Federbügel ausgebildet wird. Bevorzugt werden der Lagerabschnitt, der Zwischenabschnitt und der Zungenabschnitt auch von sämtlichen Federbügeln der Federbügelanordnung ausgebildet. Dies ermöglicht es vorteilhaft die Puffervorrichtung aus standardisierten Formbauteilen aufzubauen, die dann durch die Kombination von mehreren Federbügeln in Ihrer Breitenerstreckung anpassbar sind.

Weiterbildend zu den zuvor beschriebenen Ausführungsformen der Erfindung ist es vorgesehen, dass entlang der Längsachse zwischen der Schwenklagerung und dem Sicherungselement wenigstens ein, bevorzugt elastisch oder plastisch deformierbares, Pufferelement, insbesondere aus einem Elastomermaterial, in Bezug auf die Tiefenachse zwischen der Vorderseite der Trägerplatte und der Rückseite der Federbügelanordnung angeordnet ist, bevorzugt zum Verstärken der Pufferwirkung der Puffervorrichtung. Das zusätzliche Pufferelement ermöglicht es vorteilhaft die Pufferwirkung der Puffervorrichtung zu verbessern, da die Pufferwirkung durch das zusätzliche Pufferelement über einen großen Bereich an den individuellen Anwendungsfall anpassbar wird. Dies ermöglicht weiterbildend auch Kostenoptimierungen, da die Dicke der Federbügelanordnung verringert werden kann. Neben einem deutlich geringeren Gewicht der gesamten Puffervorrichtung bietet das auch den Vorteil, dass sich dünner ausgebildete Federbügelanordnungen wesentlich einfacher und damit kostengünstiger mechanisch herstellen lassen. Ferner besteht auch die Möglichkeit, dass die Pufferwirkung einer derart ausgebildeten Puffervorrichtung durch unterschiedlich ausgebildete Pufferelemente beliebig anpassbar ist. In diesem Zusammenhang ist es dann auch denkbar, dass die Pufferwirkung der Puffervorrichtung durch ein zusätzlich Eingeführtes oder auch austauschbares Pufferelement im Nachhinein anpassbar ist.

Die Erfindung führt auch auf ein System umfassend wenigstens eine erfindungsgemäße Puffervorrichtung sowie eine eine Gebäudefläche umfassende LKW-Ladestation, wobei die Gebäudefläche zur Ausbildung einer Ladeöffnung eine horizontale Ladekante aufweist, die beidseitig durch jeweils eine vertikale Hochkante begrenzt ist. Die Puffervorrichtung ist an der Gebäudefläche mit vertikal ausgerichteter Längsachse angeordnet, wobei die Trägerplatte und auch das wenigstens eine an der Trägerplatte angeordnete Versteifungselement sich jeweils beidseitig entlang der Längsachse zu der Ladekante erstrecken. Anders ausgedrückt bedeutet dies, dass die Puffervorrichtung derart an der Gebäudefläche angeordnet ist, dass die Puffervorrichtung abschnittsweise die Ladekante in Längsrichtung überragt. Dies hat zur Folge, dass die Montageseite der Trägerplatte abschnittsweise nicht an der Gebäudefläche angeordnet ist, sondern sich freistehend über der Ladekante erstreckt. Durch das erfindungsgemäße Versteifungselement wird die Trägerplatte derart mechanisch verstärkt, dass die Trägerplatte trotz dem entlang der Längsachse abschnittsweisen Überragen der Ladekante bei einer Kraftbeaufschlagung in Richtung der Tiefenachse durch ein rückwärts auf die Puffervorrichtung auffahrendes LKW-Heck nicht entlang der Tiefenachse verformbar ist, ohne ein rückwärtiges Stützelement vorsehen zu müssen, auf welches bevorzugt verzichtet wird.

Zudem umfasst die Erfindung auch eine Weiterbildung dieses Systems, wonach die Trägerplatte der Puffervorrichtung mittels einer Abstandsplatte an der Gebäudefläche befestigt ist. Anders ausgedrückt, bedeutet dies, dass zwischen der Gebäudefläche und der Trägerplatte die Abstandsplatte angeordnet ist, wobei die Abstandsplatte entlang der Längsachse von der Ladekante beabstandet ist, und die Trägerplatte der Puffervorrichtung die Abstandsplatte entlang der Längsachse überragt. Dies ermöglicht es vorteilhaft, die Belastung der Gebäudefläche bei Kraftbeaufschlagung der Puffervorrichtung im Bereich der Ladekante zu reduzieren. Dies ist besonders vorteilhaft in Zusammenhang mit Ladekanten, die aus Kostengründen nicht verstärkt ausgebildet wurden.

Schließlich umfasst die Erfindung auch ein System, in welchem das mindestens eine Versteifungselement so angeordnet ist, dass es die Abstandsplatte entlang der Längsachse abschnittsweise überragt. Dies verhindert somit eine elastische oder plastische Deformation der Trägerplatte bei Kraftbeaufschlagung entlang der Tiefenachse. Ferner führt die Beabstandung der Abstandsplatte von der Ladekante in Längsrichtung dazu, dass bei der Kraftbeaufschlagung der Puffervorrichtung die auf das Gebäude übermittelte Kraft nicht unmittelbar im Bereich der Ladekante auf das Gebäude einwirkt, wodurch eine Beschädigung der Ladekante bzw. der Gebäudefläche im Bereich der Ladekante vermieden wird.

Im Ergebnis ermöglicht die erfindungsgemäße Puffervorrichtung auf überraschend einfache und effiziente Weise die aus dem Stand der Technik bekannten Puffervorrichtungen zu verbessern und weiterzuentwickeln. In diesem Zusammenhang ist es besonders vorteilhaft, wenn die erfindungsgemäße Puffervorrichtung mit einer Abstandsplatte kombiniert wird, die in Längsrichtung von der Ladekante beabstandet ist, um bei Kraftbeaufschlagung der Puffervorrichtung entlang der Tiefenachse eine Belastung der Ladekante zu vermeiden.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine perspektivische Ansicht einer bevorzugten Ausführungsform der erfindungsgemäßen Puffervorrichtung, in
- Fig. 2: eine Frontansicht der aus Fig. 1 bekannten erfindungsgemäßen Puffervorrichtung, in
- Fig. 3: eine Seitenansicht der erfindungsgemäßen Puffervorrichtung im montierten Zustand mittels einer Abstandsplatte und in
- Fig. 4a - Fig. 4c:: jeweils eine Schnittansicht von drei bevorzugten Ausführungsformen der erfindungsgemäßen Puffervorrichtung für eine eine Ladekante entlang einer Längsachse überragende Montage an einer Gebäudefläche einer LKW-Ladestation.

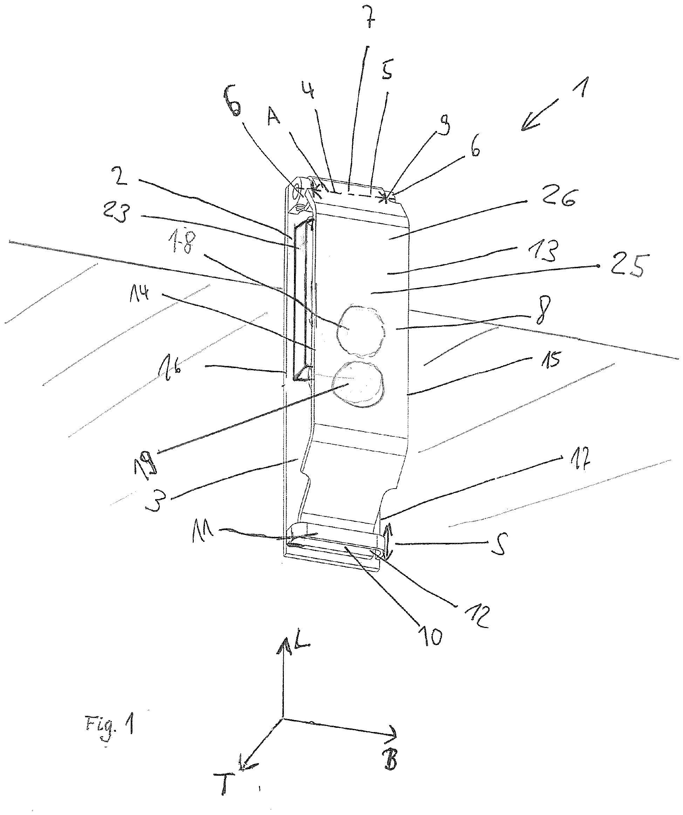

In Fig. 1 zeigt eine erfindungsgemäße Puffervorrichtung 1 in einer perspektivischen Seitenansicht im montierten Zustand, wobei die Puffervorrichtung 1 entlang der Längsachse L eine Ladekante 22 abschnittsweise überragt und die Dämpfungsanordnung 26 als Federbügelanordnung 8 ausgebildet ist. Die erfindungsgemäße Puffervorrichtung 1 umfasst eine Trägerplatte 2 aus Stahl, wobei auf einer Vorderseite 3 der Trägerplatte 2 an einem ersten, in Bezug auf die Längsachse L, oberen Ende der Trägerplatte 2 eine eine Schwenkachse 4 umfassende Schwenklagerung 5 angeordnet ist. Die Schwenklagerung 5 weist zwei Kraftaufnahmeelemente 6 auf, die entlang einer Breitenachse B um einen Lagerabstand A voneinander beabstandet sind. Zwischen den Kraftaufnahmeelementen 6 wird ein Lagerabschnitt 7 einer, vorliegend einen einzigen Federbügel aufweisenden Federbügelanordnung 8 aufgenommen. Die Federbügelanordnung 8 ist um die Schwenkachse 4 mittels eines Lagerbolzen 9 schwenkbar an den Kraftaufnahmeelementen 6 angeordnet und erstreckt sich entlang der Längsachse L zu einem zweiten Ende. In dem zweiten Ende bildet die Federbügelanordnung 8 einen Zungenabschnitt 10 aus und stützt sich auf der Vorderseite 3 der Trägerplatte 2 ab, wobei die Federbügelanordnung 8 im montierten Zustand bei Kraftbeaufschlagung durch ein rückwärts auf die Federbügelanordnung 8 entlang einer Tiefenachse T auffahrendes LKW-Heck durch elastische Deformation auf der Vorderseite 3 der Trägerplatte 2 entlang einer Gleitstrecke S in Richtung der Längsachse L gleitet. Zur Vermeidung eines Abfederns der Federbügelanordnung 8 senkrecht zur Trägerplattenvorderseitenflächenerstreckung befindet sich in Bezug auf die Tiefenachse T vor der Trägerplatte 2 ein bügelartig ausgebildetes Sicherungselement 11, welches randseitig an der Vorderseite 3 der Trägerplatte 2 festgelegt ist und eine Aufnahmeöffnung 12 für den Zungenabschnitt 10 ausbildet, in die der Zungenabschnitt 10 entlang der Längsachse L hineinragt. In Bezug auf die Längsachse L bildet die Federbügelanordnung 8 zwischen dem Lagerabschnitt 7 und dem Zungenabschnitt 10 ein Zwischenabschnitt 13 aus. Bei der dargestellten Ausführungsform der Erfindung überragt der Zwischenabschnitt 13 die Breitenerstreckung des Lagerabschnitts 7 sowie des Zungenabschnitts 10, wobei die linke Seitenkante 14 des Zwischenabschnitts 13 nicht nur parallel zu der linken Seitenkante 16 der Trägerplatte 2 verläuft, sondern auch beiden Seitenkanten 14, 16 eine feste Bezugskoordinate auf der Breitenachse B zugeordnet werden können. Ferner verläuft auch die rechte Seitenkante 15 des Zwischenabschnitts 13 parallel zu der rechten Seitenkante 17 der Trägerplatte 2, wobei auch diesen beiden Seitenkanten 15, 17 eine feste Bezugskoordinate auf der Breitenachse B zugeordnet werden können. In anderen Worten ausgedrückt bedeutet dies, dass die Breitenerstreckung der Federbügelanordnung 8 im Zwischenabschnitt 13 der Breitenerstreckung der Trägerplatte 2 entspricht. Zudem ist auf der Vorderseite 3 der Trägerplatte 2 ein stabförmiges, sich entlang der Längsachse L erstreckendes Versteifungselement 23 angeordnet. Das Versteifungselement 23 ist derart auf der Vorderseite 3 Trägerplatte 2 verschweißt, dass es sich zwischen der Trägerplatte 2 und der entlang der Tiefenachse T von der Trägerplatte 2 beabstandeten Federbügelanordnung 8 erstreckt. Zur Verbesserung der Pufferwirkung umfasst die Puffervorrichtung 1 zudem ein erstes Pufferelemente 18 sowie ein zweites Pufferelement 19, jeweils ausgebildet aus einem ein Elastomer umfassendes Material, die in Bezug auf die Längsachse L zwischen der Schwenklagerung 5 und dem Sicherungselement 11 zwischen der Vorderseite 3 der Trägerplatte 2 und der Rückseite der Federbügelanordnung 8 angeordnet sind und durch gestrichelte Linien in der Fig. 1 exemplarisch dargestellt sind. Dabei erstreckt sich das Versteifungselement 23 in Bezug auf die Längsachse L zu beiden Seiten der Ladekante 22.

Im Betrieb ermöglicht die erfindungsgemäße Puffervorrichtung 1 durch elastisches Verformen der Federbügelanordnung 8 eine Energieaufnahme bei Kontakt mit einem rückwärts an die LKW-Ladestation auffahrenden LKW-Hecks in einer Kontaktfläche 25, die in Bezug auf die Tiefenachse T die Vorderseite 3 der Trägerplatt 3 überragt. Dabei gleitet die Federbügelanordnung 8 auf der Vorderseite 3 der Trägerplatte 2 entlang der Gleitstrecke S, wobei auch zur anwendungsabhängigen Anpassung der Pufferwirkung der erfindungsgemäßen Puffervorrichtung 1 die zwischen der Vorderseite 3 der Trägerplatte 2 angeordneten beiden Pufferelemente 18, 19 kraftbeaufschlagt werden. Ferner wird durch das erfindungsgemäße Versteifungselement 23 ein plastisches Deformieren der Puffervorrichtung 1 entlang der Tiefenachse T trotz eines in Bezug auf die Längsachse L abschnittsweisen überstehen der Puffervorrichtung 1 verhindert.

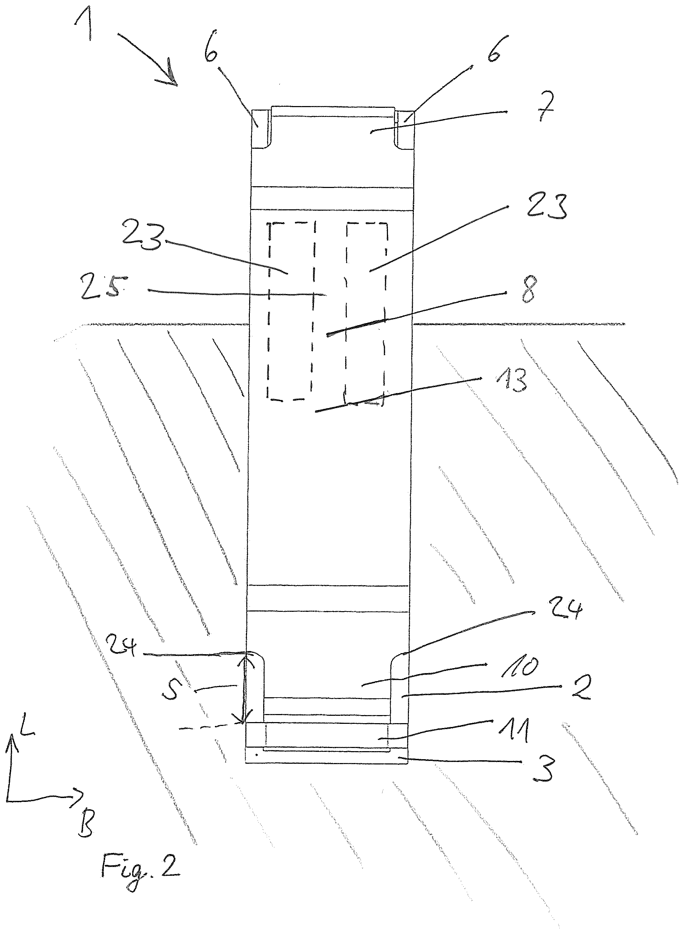

Fig. 2 zeigt die aus Fig. 1 bekannte Ausführungsform der erfindungsgemäßen Puffervorrichtung 1 in einer Frontansicht. Darin ist die die Kontaktfläche 25 aufweisende Federbügelanordnung 8 zu erkennen, die den Lagerabschnitt 7, den Zwischenabschnitt 13 sowie den Zungenabschnitt 10 umfasst. Da die beiden sich entlang der Längsachse L erstreckenden Versteifungselemente 23 zwischen der Trägerplatte 2 und der Federbügelanordnung 8 angeordnet sind befinden sich beide in Bezug auf die Tiefenachse T hinter der Federbügelanordnung 8 und sind aus diesem Grund durch strichliert eingezeichnet. In der Frontansicht wird auch deutlich, dass die Breitenerstreckung des Zwischenabschnitts 13 die Breitenerstreckung des Zungenabschnitts 10 sowie des Lagerabschnitts 7 überragt. Im Bereich des Lagerabschnitts 7 befinden sich die beiden Kraftaufnahmeelemente 6 zwischen denen der Lagerabschnitt 7 der Federbügelanordnung 8 aufgenommen ist und über die die Federbügelanordnung 8 mit der Trägerplatte 2 in Wirkverbindung steht. Auch im Bereich des Zungenabschnitts 10 steht die Federbügelanordnung 8 in Kontakt mit der Trägerplatte 2, da sich die Federbügelanordnung 8 hier auf der Vorderseite 3 der Trägerplatte 2 abstützt, um bei Kraftbeaufschlagung der Federbügelanordnung 8 entlang der Längsachse L im Bereich der Gleitstrecke S zu gleiten. Aus der in Fig. 2 dargestellten Frontansicht der erfindungsgemäßen Puffervorrichtung 1 wird auch deutlich, dass das Sicherungselement 11 beidseitig einen entlang der Längsachse L wirkenden Axialanschlag zur Begrenzung der Gleitstrecke S für einen den Zungenabschnitts 10 entlang der Breitenachse B überragenden Federbügelanschlagsabschnitt 24 ausbildet. Dies gewährleistet vorteilhaft, dass die Federbügelanordnung 8 auch bei hoher Kraftbeaufschlagung sicherlich nur im elastischen Bereich deformiert wird.

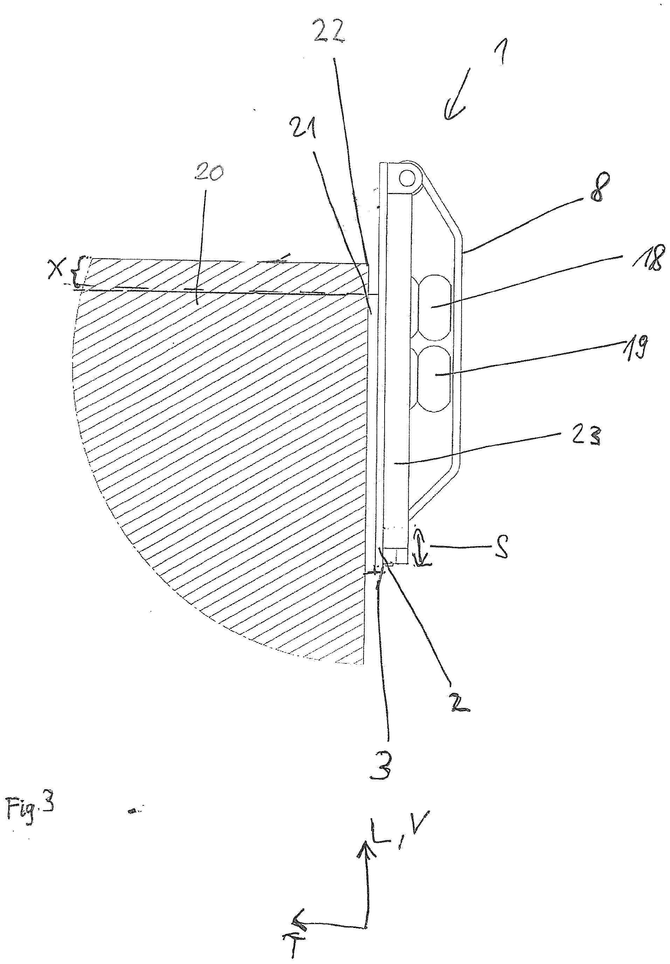

Fig. 3 zeigt eine erfindungsgemäße Puffervorrichtung 1 im montierten Zustand an einer LKW-Verladerampe 20. Die erfindungsgemäße Puffervorrichtung 1 ist mittels einer Abstandsplatte 21 an der Gebäudefläche der LKW-Ladestation festgelegt, wobei die Längsachse L der Vertikalen V entspricht. Dabei überragt die Trägerplatte 2 in Längsrichtung die Ladekante 22 der LKW-Verladerampe 20 abschnittsweise. Aus der dargestellten Seitenansicht lässt sich erkennen, dass die Abstandsplatte 21 in Bezug auf die Längsachse L von der Ladekante 22 durch einen Abstand X beabstandet an der Gebäudefläche angeordnet ist, um die Krafteinwirkung auf die Gebäudefläche im Bereich der Ladekante 22 bei Kraftbeaufschlagung der erfindungsgemäßen Puffervorrichtung 1 zu reduzieren. Dies ermöglicht es vorteilhaft, dass die Ladekante 22 der LKW-Ladestationen vor Beschädigung durch zu große Kraftbeaufschlagung geschützt wird. Ferner sind auf der Vorderseite 3 der Trägerplatte 2 entlang der Längsachse L zwei stabförmige Versteifungselement 23 zur Verbesserung der Stabilität der Trägerplatte 2 vorgesehen, die derart auf der Trägerplatte 2 angeordnet sind, dass die beiden Versteifungselemente 23 entlang der Längsachse L die Abstandsplatte 21 abschnittsweise überragen. Durch die stabförmigen Versteifungselemente 23 kann die Formstabilität der Puffervorrichtung 1 verbessert werden.

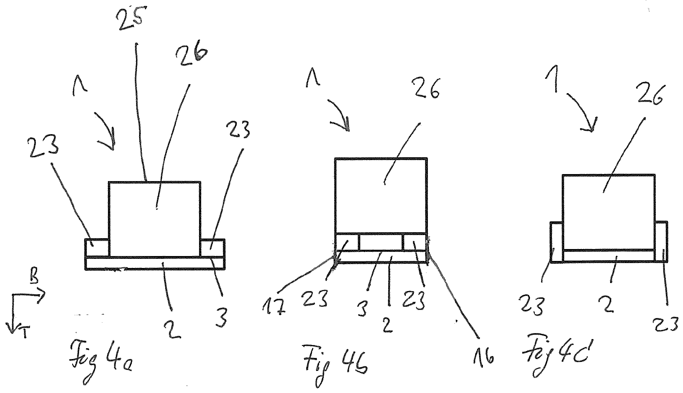

Fig. 4a, Fig. 4b sowie Fig. 4c zeigen jeweils eine Schnittansicht einer bevorzugten Ausführungsform der Erfindung. Bei der in Fig. 4a dargestellten Schnittansicht ist die Dämpfungsanordnung 26 unmittelbar auf der Vorderseite 3 der Trägerplatte 2 angeordnet. Die Dämpfungsanordnung 26 besteht aus einem rechteckförmig konturierten, blockartig ausgebildeten Elastomermaterial. Die Dämpfungsanordnung 26 bietet entlang der Tiefenachse T auf der der Trägerplatte 2 gegenüberliegenden Seite die Kontaktfläche 25 für die Aufnahme des LKW-Hecks an. Entlang der Breitenachse B unmittelbar benachbart zu der Dämpfungsanordnung 26 sind beidseitig zwei Versteifungselemente 23 angeordnet, die sich entlang der Längsachse L erstrecken und die Trägerplatte 2 bei Kraftbeaufschlagung entlang der Tiefenachse T mechanisch verstärken, um ein elastisches oder plastisches Verformen der überstehenden Trägerplatte 2 zu vermeiden. Da die beiden Versteifungselemente 23 auf der Trägerplatte 2 materialschlüssig durch einen Schweißprozess festgelegt sind, überragen beide Versteifungselemente 23 die Vorderseite 3 der Trägerplatte 2. Dagegen ist das Versteifungselement 23 im Vergleich zur Kontaktfläche 25 der Dämpfungsanordnung 26 weit zurückgesetzt, um einen Kontakt der Versteifungselemente 23 trotz starker Kraftbeaufschlagung der Dämpfungsanordnung 26 zu vermeiden.

In Fig. 4b befinden sich die Versteifungselemente 23 im Gegensatz zu Fig. 4a nicht unmittelbar neben der Dämpfungsanordnung 26 sondern zwischen der Dämpfungsanordnung 26 und der Trägerplatte 2. Auch hier sind die Versteifungselemente 23 durch einen Schweißprozess auf der Vorderseite 3 der Trägerplatte 2 festgelegt. Entlang der Tiefenachse T ist auf den beiden Versteifungselementen 23 die Dämpfungsanordnung 26 festgelegt, wobei sich die Dämpfungsanordnung in Bezug auf die Breitenachse B bis zu den beiden Seitenkanten 16, 17 der Trägerplatte 2 erstreckt. Diese Ausführungsform der Erfindung hat den Vorteil, dass trotz starker Kraftbeaufschlagung der Dämpfungsanordnung 26 eine Kontaktierung der Versteifungselemente 23 mit dem LKW-Heck ausgeschlossen ist.

In Fig. 4c ist schließlich eine Ausführungsform der erfindungsgemäßen Puffervorrichtung 1 gezeigt, in welcher die beiden Versteifungselemente 23 entlang der Breitenachse B benachbart zu der Trägerplatte 2 angeordnet sind. Dabei überragen beide Versteifungselemente 23 die Trägerplatte 2 in Bezug auf die Tiefenachse T. In Bezug auf die Breitenachse B ist zwischen den beiden Versteifungselementen 23 die Dämpfungsanordnung 26 aufgenommen, die unmittelbar auf der Trägerplatte 2 festgelegt ist.

### Bezugszeichen

- 1: Puffervorrichtung
- 2: Trägerplatte
- 3: Vorderseite der Trägerplatte
- 4: Schwenkachse
- 5: Schwenklagerung
- 6: Kraftaufnahmeelemente
- 7: Lagerabschnitt
- 8: Federbügelanordnung
- 9: Lagerbolzen
- 10: Zungenabschnitt
- 11: Sicherungselement
- 12: Aufnahmeöffnung
- 13: Zwischenabschnitt
- 14: linke Seitenkante des Zwischenabschnitts
- 15: rechte Seitenkante des Zwischenabschnitts
- 16: linke Seitenkante der Trägerplatte
- 17: rechte Seitenkante der Trägerplatte
- 18: erstes Pufferelement
- 19: zweites Pufferelement
- 20: LKW-Verladerampe
- 21: Abstandsplatte
- 22: Ladekante
- 23: Versteifungselement
- 24: Federbügelanschlagsabschnitt
- 25: Kontaktfläche
- 26: Dämpfungsanordnung
- A: Lagerabstand
- S: Gleitstrecke
- X: Kantenabstand

## Patentansprüche

1. Puffervorrichtung (1) zur Montage im Bereich einer, eine Ladeöffnung umfassenden, LKW-Ladestation, insbesondere einer Verladerampe (20), zur Energieabsorption bei Kontakt mit einem rückwärts an die LKW-Ladestation auffahrenden LKW-Heck, umfassend wenigstens eine, sich entlang einer Längsachse (L) und einer senkrecht dazu orientierten Breitenachse (B) erstreckenden und eine Kontaktfläche (25) zur Kraftaufnahme von einem LKW-Heck aufweisenden, Dämpfungsanordnung (26) auf einer Vorderseite (3) einer, zwei entlang der Breitenachse (B) zueinander beabstandete, bevorzugt parallele, Seitenkanten (16, 17) umfassenden, Trägerplatte (2), wobei die Trägerplatte (2) gegenüber der vorderen Vorderseite (3) eine, bevorzugt zur Vorderseite (3) parallele, rückwärtige Montageseite aufweist, wobei an der Trägerplatte (2) mindestens ein sich entlang der Längsachse (L) erstreckendes stabförmiges, Versteifungselement (23) angeordnet, bevorzugt materialschlüssig verbunden, ist zum Verhindern einer plastischen Deformation entlang einer sich senkrecht zur Breitenachse (B) und zur Längsachse (L) erstreckenden Tiefenachse (T) und dass das Versteifungselement (23) entlang der Tiefenachse (T) die Vorderseite (3) der Trägerplatte (2) nach vorne überragt und gegenüber der Kontaktfläche (25) der Dämpfungsanordnung (26) entlang der Tiefenachse (T) zurückgesetzt ist, **dadurch gekennzeichnet, dass** das stabförmige Versteifungselement entlang der Längsachse ausgerichtet ist.

2. Puffervorrichtung nach Anspruch 1,
**dadurch gekennzeichnet,**
**dass** das mindestens eine Versteifungselement (23) auf der Vorderseite der Trägerplatte, bevorzugt zwischen der Vorderseite (3) der Trägerplatte (2) und der Dämpfungsanordnung (26), insbesondere mit Abstand zu der Dämpfungsanordnung (26) entlang der Tiefenachse (T) und/oder entlang der Breitenachse (B) seitlich zu der Dämpfungsanordnung (26) angeordnet ist und/oder dass das mindestens eine Versteifungselement (23) seitlich benachbart zu der Trägerplatte (2) angeordnet ist.

3. Puffervorrichtung nach Anspruch 1 oder Anspruch 2,
**dadurch gekennzeichnet,**
**dass** an der Trägerplatte (2), insbesondere auf der Trägerplatte (2), mindestens zwei entlang der Breitenachse (B) voneinander beabstandete Versteifungselemente (23) angeordnet sind.

4. Puffervorrichtung nach einem der vorhergehenden Ansprüche,
**dadurch gekennzeichnet,**
**dass** das Versteifungselement (23) entlang der Längsachse (L) mindestens 60%, der Längserstreckung der Trägerplatte (2) umfasst.

5. Puffervorrichtung nach einem der vorhergehenden Ansprüche,
**dadurch gekennzeichnet,**
**dass** die Trägerplatte (2) auf der zur Vorderseite (3) der Trägerplatte (2) abgewandten, rückwärtigen Montageseite der Trägerplatte (2) auf einer Abstandsplatte (21) zur Beabstandung der Trägerplatte (2) von einer Gebäudefläche festgelegt ist, wobei bevorzugt die Trägerplatte (2) entlang der Längsachse (L) in einem in Bezug auf die Längsachse (L) oberen Bereich zu der Abstandsplatte (21) in einer vertikalen Hochrichtung übersteht.

6. Puffervorrichtung nach einem der vorhergehenden Ansprüche, **dadurch gekennzeichnet,**
**dass** die Dämpfungsanordnung (26) eine Federbügelanordnung (8) aufweist.

7. Puffervorrichtung nach Anspruch 6,
**dadurch gekennzeichnet,**
**dass** die mindestens einen Federbügel aufweisende Federbügelanordnung (8), die im Bereich eines ersten Endes in einem Lagerabschnitt (7) um eine sich parallel zur Breitenachse (B) orientierte Schwenkachse (4) einer Schwenklagerung (5) auslenkbar gelagert und an einer Vorderseite (3) einer zwei entlang der Breitenachse (B) zueinander beabstandete, bevorzugt parallele Seitenkanten (16; 17) umfassenden Trägerplatte (2) festgelegt ist, wobei die Schwenklagerung (5) zwei entlang der Breitenachse (B) um einen Lagerabstand (A) beabstandete Kraftaufnahmeelemente (6) aufweist, zwischen denen der Lagerabschnitt (7) aufgenommen ist und die bevorzugt einen die Schwenkachse (4) definierenden Lagerbolzen (9) tragen, wobei die Federbügelanordnung (8) sich im Bereich eines von dem ersten Ende entlang der Längsachse (L) beabstandeten zweiten Endes mit einer Abstützfläche auf der Vorderseite (3) der Trägerplatte (2) abstützt, um bei elastischer Deformation entlang der Längsachse (L) auf der Trägerplatte (2) entlang einer Gleitstrecke (S) zu gleiten und wobei die Federbügelanordnung (8) im Bereich des zweiten Endes durch ein, bevorzugt bügelförmiges, eine Aufnahmeöffnung für einen Zungenabschnitt (10) der Federbügelanordnung (8) begrenzendes Sicherungselement (11) gegen ein Abfedern senkrecht zu einer Trägerplattenvorderseitenflächenerstreckung gesichert ist, wobei insbesondere die Federbügelanordnung (8) in einem entlang der Längsachse (L) zwischen dem Lagerabschnitt (7) und dem Zungenabschnitt (10) ausgebildeten Zwischenabschnitt (13) eine größere entlang der Breitenachse (B) orientierte Breitenerstreckung aufweist als in dem Lagerabschnitt (7) und/oder als in dem Zungenabschnitt (10), insbesondere entlang der Breitenachse (B) bis zu mindestens einer der Seitenkanten (16; 17) der Trägerplatte (2) oder darüber hinaus.

8. Puffervorrichtung nach Anspruch 7,
**dadurch gekennzeichnet,**
**dass** das Sicherungselement (11) einen Axialanschlag zur Begrenzung der Gleitstrecke (S) für einen den Zungenabschnitt (10) entlang der Breitenachse (B) überragenden Federbügelanschlagsabschnitt (24) der Federbügelanordnung (8) ausbildet.

9. Puffervorrichtung nach Anspruch 8,
**dadurch gekennzeichnet,**
**dass** der Axialanschlag und der Federbügelanschlagsabschnitt (24) zum Begrenzen der Gleitstrecke (S) in einem nicht kraftbeaufschlagten Zustand der Federbügelanordnung (8) entlang der Längsachse (L) um einen einer maximalen Gleitstreckenerstreckung entsprechenden Abstand, bevorzugt aus einem Wertebereich zwischen 0,5cm und 10cm, weiter bevorzugt zwischen 0,5cm und 8cm, beabstandet sind.

10. Puffervorrichtung nach einem der Ansprüche 7 bis 9,
**dadurch gekennzeichnet,**
**dass** die Breitenerstreckung des Zwischenabschnitts (13) und/oder mindestens eines der Federbügel im Bereich des Zwischenabschnitts (13) größer ist als 15cm, insbesondere gewählt ist zwischen 16cm und 32cm.

11. Puffervorrichtung nach einem Ansprüche 7 bis 10,
**dadurch gekennzeichnet,**
**dass** die Federbügelanordnung (8) wenigstens zwei entlang der Breitenachse angeordnete, bevorzugt spiegelsymmetrisch ausgebildete Federbügel aufweist, wobei der Lagerabschnitt (9), der Zwischenabschnitt (13) und der Zungenabschnitt (10) jeweils von mindestens zwei der Federbügel gebildet sind.

12. Puffervorrichtung nach einem Ansprüche 7 bis 11,
**dadurch gekennzeichnet,**
**dass** entlang der Längsachse (L) zwischen der Schwenklagerung (5) und dem Sicherungselement (11) wenigstens ein bevorzugt elastisch oder plastisch deformierbares Pufferelement (18, 19) zwischen der Vorderseite der Trägerplatte und einer der Vorderseite (3) der Trägerplatte (2) zugewandten Rückseite der Federbügelanordnung (8) angeordnet ist, bevorzugt zum Verstärken der Pufferwirkung der Puffervorrichtung (1).

13. System umfassend wenigstens eine Puffervorrichtung, die nach einem der Ansprüche 1 bis 12 ausgebildet ist sowie eine eine Gebäudefläche umfassende LKW-Ladestation, wobei die Gebäudefläche zur Ausbildung einer Ladeöffnung eine horizontale Ladekante (22) aufweist, die bevorzugt beidseitig durch jeweils eine vertikale Hochkante begrenzt ist, wobei die Puffervorrichtung (1) an der Gebäudefläche angeordnet ist, bevorzugt mit vertikal ausgerichteter Längsachse (L) und wobei die Puffervorrichtung (1) derart an der Gebäudefläche angeordnet ist, dass sich das Versteifungselement (23) beidseitig entlang der Längsachse (L) zu der Ladekante (22) erstreckt.

14. System nach Anspruch 13,
**dadurch gekennzeichnet,**
**dass** zwischen der Gebäudefläche und der Trägerplatte (2) eine Abstandsplatte (21) angeordnet ist, wobei die Abstandplatte (21) entlang der Längsachse (L) von der Ladekante (22) beabstandet ist.

15. System nach Anspruch 14,
**dadurch gekennzeichnet,**
**dass** das Versteifungselement (23) der Trägerplatte (2) nach oben entlang der Vertikalen (V) die Abstandsplatte (21) entlang der Längsachse (L) abschnittsweise überragt.

## Claims

1. A buffer device (1) for being installed in the area of a truck loading station, in particular a loading ramp (20), comprising a loading opening in order to absorb energy when coming into contact with a truck rear end driving backward against the truck loading station, the buffer device (1) comprising at least one damping assembly (26) extending along a longitudinal axis (L) and a width axis (B) perpendicular thereto and having a contact surface (25) for absorbing forces from a truck rear end, the damping assembly (26) being disposed on a front (3) of a support plate (2) comprising two preferably parallel side edges (16, 17) spaced apart from each other along the width axis (B), the support plate (2) having a rear mounting side opposite the front (3), the rear mounting side preferably being parallel to the front (3), at least one rod-shaped stiffening element (23) being disposed on, preferably bonded to, the support plate (2), the stiffening element (23) extending along the longitudinal axis (L) and serving to prevent plastic deformation along a depth axis (T), which is perpendicular to the width axis (B) and the longitudinal axis (L), and the stiffening element (23) protruding over the front (3) of the support plate (2) in the forward direction along the depth axis (T) and being recessed along the depth axis (T) relative to the contact surface (25) of the damping assembly (26),
**characterized in that**
the rod-shaped stiffening element is aligned with the longitudinal axis.

2. The buffer device according to claim 1,
**characterized in that**
the at least one stiffening element (23) is disposed laterally to the damping assembly (26) along the depth axis (T) and/or along the width axis (B) on the front of the support plate, preferably between the front (3) of the support plate (2) and the damping assembly (26), in particular at a distance from the damping assembly, and/or that the at least one stiffening element (23) is disposed laterally next to the support plate (2).

3. The buffer device according to claim 1 or claim 2,
**characterized in that**
at least two stiffening elements (23), which are spaced apart from each other along the width axis (B), are disposed on the support plate (2), in particular on top of the support plate (2).

4. The buffer device according to any one of the preceding claims, **characterized in that**
the stiffening element (23) comprises at least 60 % of the length of the support plate (2) along the longitudinal axis (L).

5. The buffer device according to any one of the preceding claims, **characterized in that**
the support plate (2) is fixed to a spacer plate (21) for spacing the support plate (2) apart from a building surface on the rear mounting side of the support plate (2), which faces away from the front (3) of the support plate (2), the support plate (2) preferably protruding over the spacer plate (21) in a vertical direction along the longitudinal axis (L) in an upper area with respect to the longitudinal axis (L).

6. The buffer device according to any one of the preceding claims, **characterized in that**
the damping assembly (26) has a spring clip assembly (8).

7. The buffer device according to claim 6,
**characterized in that**
the spring clip assembly (8), which has at least one spring clip, is mounted in such a manner in a bearing portion (7) in the area of a first end that it can be moved about a pivot axis (4) of a pivot bearing (5), which is oriented parallel to the width axis (B), and is fixed to a front (3) of a support plate (2) comprising two preferably parallel side edges (16; 17) spaced apart along the width axis (B), the pivot bearing (5) having two force absorber elements (6) which are spaced apart by a bearing distance (A) along the width axis (B) and between which the bearing portion (7) is accommodated and which preferably support a bearing bolt (9) defining the pivot axis (4), the spring clip assembly (8) being supported on the front (3) of the support plate (2) with a support surface in the area of a second end, which is spaced apart from the first end along the longitudinal axis (L), in order to slide along a sliding distance (S) on the support plate (2) when it is elastically deformed along the longitudinal axis (L), and the spring clip assembly (8) being secured against springing off in a direction perpendicular to a support plate front surface dimension by a preferably bow-shaped securing element (11), which defines a receiving opening for a tongue portion (10) of the spring clip assembly (8), in the area of the second end, the spring clip assembly (8) in particular having a greater width along the width axis (B) in an intermediate portion (13) formed between the bearing portion (7) and the tongue portion (10) than in the bearing portion (7) and/or in the tongue portion (10), in particular along the width axis (B) up to at least one of the side edges (16; 17) of the support plate (2) or beyond.

8. The buffer device according to claim 7,
**characterized in that**
the securing element (11) forms an axial stop for limiting the sliding distance (S) for a spring clip stop portion (24) of the spring clip assembly (8), the spring clip stop portion (24) protruding over the tongue portion (10) along the width axis (B).

9. The buffer device according to claim 8,
**characterized in that**
the axial stop and the spring clip stop portion (24) for limiting the sliding distance (S) are spaced apart along the longitudinal axis (L) by a distance corresponding to a maximum sliding distance, which is preferably from a value range between 0.5 cm and 10 cm, further preferably between 0.5 cm and 8cm, when the spring clip assembly (8) is relaxed.

10. The buffer device according to any one of claims 7 to 9,
**characterized in that**
the width of the intermediate portion (13) and/or at least one of the spring clips in the area of the intermediate portion (13) is greater than 15 cm, in particular selected between 16 cm and 32 cm.

11. The buffer device according to any one of claims 7 to 10,
**characterized in that**
the spring clip assembly (8) has at least two preferably mirror-symmetrical spring clips disposed along the width axis, the bearing portion (9), the intermediate portion (13) and the tongue portion (10) each being formed by at least two of the spring clips.

12. The buffer device according to any one of claims 7 to 11,
**characterized in that**
along the longitudinal axis (L) between the pivot bearing (5) and the securing element (11), at least one buffer element (18, 19), which is preferably elastically or plastically deformable, is disposed between the front of the support plate and a rear of the spring clip assembly (8), which faces the front (3) of the support plate (2), preferably for increasing the buffer effect of the buffer device (1).

13. A system comprising at least one buffer device configured according to any one of claims 1 to 12 and a truck loading station comprising a building surface, the building surface having a horizontal loading sill (22) for forming a loading opening, the loading sill (22) preferably being limited by a vertical edge on either side, the buffer device (1) being disposed on the building surface, preferably with the longitudinal axis (L) oriented vertically, and the buffer device (1) being disposed on the building surface in such a manner that the stiffening element (23) extends toward the loading sill (22) along the longitudinal axis (L) on both sides.

14. The system according to claim 13,
**characterized in that**
a spacer plate (21) is disposed between the building surface and the support plate (2), the spacer plate (21) being spaced apart from the loading sill (22) along the longitudinal axis (L).

15. The system according to claim 14,
**characterized in that**
the stiffening element (23) of the support plate (2) partially protrudes upward over the spacer plate (21) in the vertical direction (V) along the longitudinal axis (L).

## Revendications

1. Dispositif de tampon (1) destiné à être monté dans la zone d'une station de chargement de camion, notamment une rampe de chargement (20), comprenant une ouverture de chargement afin d'absorber de l'énergie lors du contact avec un arrière de camion tamponnant la station de chargement de camion en arrière, le dispositif de tampon (1) comprenant au moins un ensemble d'amortissement (26) s'étendant le long d'un axe longitudinal (L) et d'un axe de largeur (B) perpendiculaire à celui-ci et ayant une surface de contact (25) pour absorber des forces d'un arrière de camion, l'ensemble d'amortissement (26) étant disposé sur un côté avant (3) d'une plaque de support (2) comprenant deux bords latéraux (16, 17), qui sont de préférence parallèles et qui sont espacés l'un de l'autre le long de l'axe de largeur (B), la plaque de support (2) ayant un côté de montage arrière opposé au côté avant (3), le côté de montage arrière étant de préférence parallèle au côté avant (3), au moins un élément raidisseur (23) en forme de barre étant disposé sur, de préférence lié par matière à, la plaque de support (2), l'élément raidisseur (23) s'étendant le long de l'axe longitudinal (L) et servant à empêcher une déformation plastique le long d'un axe de profondeur (T), qui est perpendiculaire à l'axe de largeur (B) et à l'axe longitudinal (L), et l'élément raidisseur (23) dépassant le côté avant (3) de la plaque de support (2) vers l'avant le long de l'axe de profondeur (T) et étant enfoncé le long de l'axe de profondeur (T) par rapport à la surface de contact (25) de l'ensemble d'amortissement (26),
**caractérisé en ce que**
l'élément raidisseur en forme de barre est aligné avec l'axe longitudinal.

2. Dispositif de tampon selon la revendication 1,
**caractérisé en ce que**
l'au moins un élément raidisseur (23) est disposé latéralement à l'ensemble d'amortissement (26) le long de l'axe de profondeur (T) et/ou le long de l'axe de largeur (B) sur le côté avant de la plaque de support, de préférence entre le côté avant (3) de la plaque de support (2) et l'ensemble d'amortissement (26), notamment à une distance de l'ensemble d'amortissement, et/ou **en ce que** l'au moins un élément raidisseur (23) est disposé latéralement à côté de la plaque de support (2).

3. Dispositif de tampon selon la revendication 1 ou la revendication 2, **caractérisé en ce**
**qu'**au moins deux éléments raidisseur (23), qui sont espacés l'un de l'autre le long de l'axe de largeur (B), sont disposés sur la plaque de support (2), notamment sur le dessus de la plaque de support (2).

4. Dispositif de tampon selon l'une quelconque des revendications précédentes,
**caractérisé en ce que**
l'élément raidisseur (23) comprend au moins 60 % de la longueur de la plaque de support (2) le long de l'axe longitudinal (L).

5. Dispositif de tampon selon l'une quelconque des revendications précédentes,
**caractérisé en ce que**
la plaque de support (2) est fixé sur une plaque d'écartement (21) pour écarter la plaque de support (2) d'une surface de bâtiment du côté de montage arrière de la plaque de support (2), qui est détourné du côté avant (3) de la plaque de support (2), la plaque de support (2) dépassant de préférence la plaque d'écartement (21) dans une direction verticale le long de l'axe longitudinal (L) dans une zone supérieure par rapport à l'axe longitudinale (L).

6. Dispositif de tampon selon l'une quelconque des revendications précédentes,
**caractérisé en ce que**
l'ensemble d'amortissement (26) a un ensemble d'étriers à ressort (8).

7. Dispositif de tampon selon la revendication 6,
**caractérisé en ce que**
l'ensemble d'étriers à ressort (8), qui a au moins un étrier à ressort, est monté de telle manière dans une partie de palier (7) dans la zone d'une première extrémité qu'il peut être tourné autour d'un axe de pivotement (4) d'un palier de pivotement (5), qui est orienté parallèlement à l'axe de largeur (B), et est fixé à un côté avant (3) d'une plaque de support (2) comprenant deux bords latéraux (16 ; 17), qui sont de préférence parallèles et qui sont espacés l'un de l'autre le long de l'axe de largeur (B), le palier de pivotement (5) ayant deux éléments d'absorption de force (6) qui sont espacés l'un de l'autre d'une distance de palier (A) le long de l'axe de largeur (B) et entre lesquels la partie de palier (7) est logée et qui supportent de préférence un boulon de palier (9) définissant l'axe de pivotement (4), l'ensemble d'étriers à ressort (8) s'appuyant sur le côté avant (3) de la plaque de support (2) avec une surface de support dans la zone d'une deuxième extrémité, qui est espacée de la première extrémité le long de l'axe longitudinal (L), afin de glisser le long d'une distance de glissement (S) sur la plaque de support (2) quand il est déformé élastiquement le long de l'axe longitudinal (L), et l'ensemble d'étriers à ressort (8) étant empêché de sauter perpendiculairement à une dimension de surface de côté avant de plaque de support dans la région de la deuxième extrémité par un élément de sécurité (11), qui est de préférence en forme d'arc et qui définit une ouverture de réception pour une partie de languette (10) de l'ensemble d'étriers à ressort (8), l'ensemble d'étriers à ressort (8) ayant notamment une largeur plus grande le long de l'axe de largeur (B) dans une partie intermédiaire (13) formée entre la partie de palier (7) et la partie de languette (10) que dans la partie de palier (7) et/ou dans la partie de languette (10), notamment le long de l'axe de largeur (B) jusqu'à au moins un des bords latéraux (16 ; 17) de la plaque de support (2) ou au-delà.

8. Dispositif de tampon selon la revendication 7,
**caractérisé en ce que**
l'élément de sécurité (11) forme une butée axiale pour limiter la distance de glissement (S) pour une partie de butée d'étrier à ressort (24) de l'ensemble d'étriers à ressort (8), la partie de butée d'étrier à ressort (24) dépassant la partie de languette (10) le long de l'axe de largeur (B).

9. Dispositif de tampon selon la revendication 8,
**caractérisé en ce que**
la butée axiale et la partie de butée d'étrier à ressort (24) pour limiter la distance de glissement (S) sont espacées le long de l'axe longitudinal (L) d'une distance correspondant à une distance de glissement maximale, qui est de préférence dans une gamme de valeurs entre 0,5 cm et 10 cm, plus préférentiellement entre 0,5 cm et 8 cm, quand l'ensemble d'étriers à ressort (8) est détendu.

10. Dispositif de tampon selon l'une quelconque des revendications 7 à 9,
**caractérisé en ce que**
la largeur de la partie intermédiaire (13) et/ou d'au moins un des étriers à ressort dans la région de la partie intermédiaire (13) est supérieure à 15 cm, notamment sélectionnée entre 16 cm et 32 cm.

11. Dispositif de tampon selon l'une quelconque des revendications 7 à 10,
**caractérisé en ce que**
l'ensemble d'étriers à ressort (8) a au moins deux étriers à ressort, qui sont de préférence symétriques et qui sont disposés le long de l'axe de largeur, la partie de palier (9), la partie intermédiaire (13) et la partie de languette (10) étant formées chacune par au moins deux des étriers à ressort.

12. Dispositif de tampon selon l'une quelconque des revendications 7 à 11,
**caractérisé en ce que**
le long de l'axe longitudinal (L) entre le palier de pivotement (5) et l'élément de sécurité (11), au moins un élément de tampon (18, 19), qui est de préférence déformable élastiquement ou plastiquement, est disposé entre le côté avant de la plaque de support et un côté arrière de l'ensemble d'étriers à ressort (8), qui fait face au côté avant (3) de la plaque de support (2), de préférence pour augmenter l'effet tampon du dispositif de tampon (1).

13. Système comprenant au moins un dispositif de tampon configuré selon l'une quelconque des revendications 1 à 12 et une station de chargement de camion comprenant une surface de bâtiment, la surface de bâtiment ayant un seuil de chargement (22) horizontal pour former une ouverture de chargement, le seuil de chargement (22) étant de préférence limité par un bord vertical de part et d'autre, le dispositif de tampon (1) étant disposé sur la surface de bâtiment, de préférence avec l'axe longitudinal (L) orienté verticalement, et le dispositif de tampon (1) étant disposé sur la surface de bâtiment de telle manière que l'élément raidisseur (23) s'étend vers le seuil de chargement (22) le long de l'axe longitudinal (L) de part et d'autre.

14. Système selon la revendication 13,
**caractérisé en ce**
**qu'**une plaque d'écartement (21) est disposée entre la surface de bâtiment et la plaque de support (2), la plaque d'écartement (21) étant espacée du seuil de chargement (22) le long de l'axe longitudinal (L).

15. Système selon la revendication 14,
**caractérisé en ce que**
l'élément raidisseur (23) de la plaque de support (2) dépasse partiellement la plaque d'écartement (21) vers le haut dans la direction verticale (V) le long de l'axe longitudinal (L).
